# EUROPEAN PATENT APPLICATION

(11) **EP 4 636 921 A1**
(43) Date of publication of application: **22.10.2025**
(21) Application number: 24865630.8
(22) Date of filing: 24.06.2024
(51) Int. Cl.: H01M 50/289, H01M 10/6557, H01M 10/613, H01M 10/6561, H01M 50/264, H01M 50/213, H01M 50/249

(54) **BATTERY PACK**

(30) Priority: 11.09.2023 KR 20230120716
(71) Applicant: LG Energy Solution, Ltd., Seoul 07335 (KR)
(72) Inventor: AHN, Jun-Young, Daejeon 34122 (KR); PARK, So-Jeong, Daejeon 34122 (KR); SONG, Jong-Min, Daejeon 34122 (KR); OH, Kwang-Keun, Daejeon 34122 (KR); LEE, Yong-Ho, Daejeon 34122 (KR); JUNG, In-Hyuk, Daejeon 34122 (KR); YANG, Jin-Oh, Daejeon 34122 (KR)
(74) Representative: Goddar, Heinz J.
(86) International application number: PCT/KR2024/008727
(87) International publication number: WO 2025/058186

(57) **Abstract**

A battery pack is disclosed. The battery pack according to an embodiment of the present disclosure includes a base plate; an outer side wall protruded upward from the base plate; a battery array located on the base plate and including a plurality of battery cells; an inner side wall covering a side of the battery array and extended in a front-rear direction; and an upper enclosure covering a front side of the battery array and extended in a left-right direction.

## Description

### TECHNICAL FIELD

The present disclosure relates to a battery pack.

This application is based on and claims priority from Korean Patent Application No. 10-2023-0120716, filed on September 11, 2023, with the Korean Intellectual Property Office, the disclosure of which is incorporated herein in its entirety by reference.

### BACKGROUND

There has been a dramatic increase in demand for portable electronic products such as laptop computers, video cameras and mobile phones, and with the widespread use of robots and electric vehicles, many studies are being made on high performance secondary batteries that can be recharged repeatedly.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily use lithium-based oxide and carbon materials as a positive electrode active material and a negative electrode active material, respectively. A lithium secondary battery includes an electrode assembly including a positive electrode plate and a negative electrode plate respectively coated with the positive electrode active material and the negative electrode active material with a separator interposed between the positive electrode plate and the negative electrode plate, and an outer packaging material or a battery case accommodating the electrode assembly and an electrolyte solution in an air-tight manner.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the outer packaging material.

Recently, secondary batteries are widely used for power or energy storage in not only small devices such as mobile electric devices but also medium- or large-sized devices such as electric vehicles or Energy Storage Systems (ESS). A plurality of secondary batteries may be electrically connected and received in a module case to form a battery module. Additionally, a plurality of battery modules may be connected to form a battery pack.

Because medium- or large-scale battery packs for electric vehicles include a large number of battery cells and battery modules to increase the output and/or capacity, the weight may greatly increase. Accordingly, there is a need for a structure for increasing stiffness and energy density of the battery pack. Additionally, there is a need for a structure for reducing the weight of the battery pack.

### SUMMARY

### Technical Problem

An object of the present disclosure is to solve these and other problems.

Another object of the present disclosure is to provide a battery pack with improved assembly efficiency.

Still another object of the present disclosure is to provide a battery pack with improved energy density.

Yet another object of the present disclosure is to provide a battery pack with reduced weight.

### Technical Solution

To achieve the above-described objectives, a battery pack according to an embodiment of the present disclosure includes a base plate; an outer side wall protruded upward from the base plate; a battery array located on the base plate and including a plurality of battery cells; an inner side wall covering a side of the battery array and extended in a front-rear direction; and an upper enclosure covering a front side of the battery array and extended in a left-right direction.

Additionally, the battery pack may further include a resin that fills the battery array.

Additionally, the battery pack may further include an insulation member extended across the battery array.

Additionally, the battery pack may further include a cooling unit extended across the battery array.

Additionally, the upper enclosure may include a slot, and the cooling unit may be inserted into the slot.

Additionally, the cooling unit may include a cooling tube extended across the battery array; and a head disposed at a front side of the cooling tube, and the head may pass through the slot.

Additionally, the slot may be open downward.

Additionally, the battery pack may further include a lower enclosure located below the upper enclosure and coupled to the upper enclosure.

Additionally, the battery pack may further include a fastening member configured to fasten the lower enclosure to the upper enclosure.

Additionally, the lower enclosure may cover a bottom of the slot.

Additionally, the upper enclosure may further include a protrusion on a lower surface, and the lower enclosure may include a groove into which the protrusion is inserted.

Additionally, the lower enclosure may extend rearward and cover at least some of the battery array.

A vehicle according to an aspect of the present disclosure includes the battery pack of the present disclosure.

### Advantageous Effects

According to at least one of the embodiments of the present disclosure, it may be possible to improve stiffness of the battery pack.

According to at least one of the embodiments of the present disclosure, it may be possible to improve energy density of the battery pack.

According to at least one of the embodiments of the present disclosure, it may be possible to reduce the weight of the battery pack.

### BRIEF DESCRIPTION OF THE DRAWINGS

The accompanying drawings illustrate exemplary embodiments of the present disclosure and together with the following detailed description, serve to provide a better understanding of the technical aspect of the present disclosure, and thus the present disclosure should not be construed as being limited to the drawings.
FIG. 1 is a perspective view showing a battery pack according to an embodiment of the present disclosure.
FIG. 2 is an exploded view showing some components of a battery pack according to an embodiment of the present disclosure.
FIG. 3 is a diagram showing an inner side wall of a battery pack according to an embodiment of the present disclosure.
FIG. 4 is a diagram showing an inner side wall and battery cells of a battery pack according to an embodiment of the present disclosure.
FIG. 5 is an exploded view showing some components of a battery array of a battery pack according to an embodiment of the present disclosure.
FIG. 6 is a perspective view showing a battery array of a battery pack according to an embodiment of the present disclosure.
FIG. 7 is an enlarged view of section A in FIG. 6.
FIG. 8 is a cross-sectional view of FIG. 6, taken along the line B-B'.
FIG. 9 is a cross-sectional view of FIG. 6, taken along the line C-C'.
FIGs. 10 and 11 are diagrams showing an upper enclosure of a battery pack according to an embodiment of the present disclosure.
FIGs. 12 and 13 are diagrams showing a battery array and an upper enclosure of a battery pack according to an embodiment of the present disclosure.
FIG. 14 is a cross-sectional view of FIG. 13, taken along the line D-D'.
FIG. 15 is a diagram showing some components of a battery pack according to an embodiment of the present disclosure when viewed from bottom.
FIG. 16 is a perspective view showing a battery pack according to an embodiment of the present disclosure when viewed from rear.
FIG. 17 is a diagram showing some components of a battery pack according to an embodiment of the present disclosure when viewed from bottom.
FIGs. 18 and 19 are diagrams showing a battery array and a lower enclosure of a battery pack according to an embodiment of the present disclosure.
FIGs. 20 and 21 are diagrams showing some components of a battery pack according to an embodiment of the present disclosure when viewed from bottom.
FIG. 22 is a perspective view showing some components of a battery pack according to an embodiment of the present disclosure.
FIG. 23 is a cross-sectional view of FIG. 22, taken along the line G-G'.
FIG. 24 is an enlarged view of section H in FIG. 23.
FIG. 25 is an enlarged view of section I in FIG. 23.
FIG. 26 is a diagram showing a battery array of a battery pack according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Therefore, the description provided herein and illustrations in the drawings are provided to describe some exemplary embodiments of the present disclosure, but not intended to fully describe the technical aspect of the present disclosure, so it should be understood that a variety of other equivalents and modifications could have been made thereto at the time of filing the patent application.

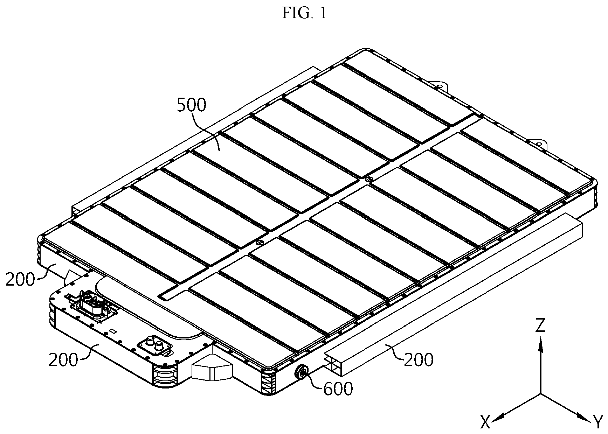

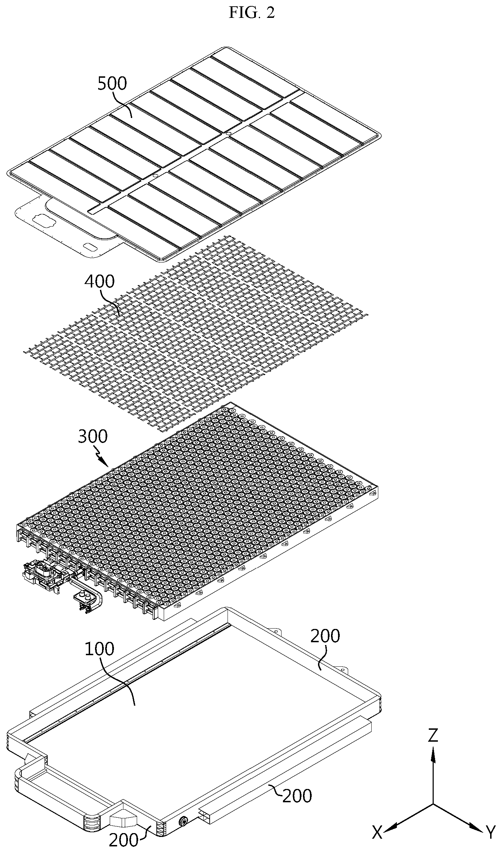

FIG. 1 is a perspective view showing a battery pack according to an embodiment of the present disclosure. FIG. 2 is an exploded view showing some components of the battery pack according to an embodiment of the present disclosure. Referring to FIGs. 1 and 2, the battery pack according to an embodiment of the present disclosure may include a base plate 100, an outer side wall 200, a battery cell array 300, an inner side wall 330 and an upper enclosure 320.

The base plate 100 may have a flat plate shape. The base plate 100 may be approximately rectangular in shape.

The outer side wall 200 may protrude upward from the base plate 100. The outer side wall 200 may be fastened, coupled, fixed or attached to the upper surface of the base plate 100. The outer side wall 200 and the base plate 100 may form an internal space.

The battery array 300 may be received in the internal space. The battery array 300 may include a plurality of battery cells 310. The plurality of battery cells 310 may be arranged to form an array. The battery array 300 may be located on the base plate 100. In this instance, the battery cell 310 may refer to a secondary battery. Additionally, the battery cell 310 may be a secondary battery having a cylindrical shape. The battery array 300 may have a rectangular parallelepiped shape.

The inner side wall 330 may include a wall body 331 extended in X axis direction or front-rear direction. The inner side wall 330 may cover the side of the battery array 300. The inner side wall 330 may cover at least some of the outermost battery cells 310 of the battery array 300. The inner side wall 330 may include a pair of inner side walls. At least some of the plurality of battery cells 310 may be fixed to the inner side wall 330. The inner side wall 330 may be fastened, coupled, fixed or attached to the base plate 100 or the outer side wall 200. The inner side wall 330 may be located between the plurality of battery cells 310 and the outer side wall 200.

The upper enclosure 320 may include a body 321. The body 321 may extend in Y axis direction or left-right direction. The upper enclosure 320 may include a pair of upper enclosures. The upper enclosure 320 may cover each of the front side and the rear side of the battery array 300. The upper enclosure 320 may cover at least some of the outermost battery cells 310 of the battery array 300. At least some of the plurality of battery cells 310 may be fixed to the upper enclosure 320. The upper enclosure 320 may be fastened, coupled, fixed or attached to the base plate 100 or the outer side wall 200. The upper enclosure 320 may be located between the plurality of battery cells 310 and the outer side wall 200.

The pair of inner side walls 330 and the pair of upper enclosures 320 may cover the periphery of the battery array 300.

By this configuration of the present disclosure, the battery array 300 may be stably supported and fixed. The inner side wall 330 and the upper enclosure 320 may improve stiffness and alignment of the battery array 300. Accordingly, stiffness and safety of the entire battery pack may be improved.

The plurality of battery cells 310 may be received. The inner side wall 330 may stably support the plurality of battery cells 310. Accordingly, stiffness of the battery pack may be improved.

Referring to FIGs. 1 and 2, the battery pack according to an embodiment of the present disclosure may include a busbar assembly 400 and a pack cover 500. The pack cover 500 may cover the internal space of the battery pack. The pack cover 500 may have a plate shape. The pack cover 500 may have a similar shape to the base plate 100. The pack cover 500 may be fastened, coupled, fixed or attached to the outer side wall 200.

The busbar assembly 400 may be located between the battery array 300 and the pack cover 500. The busbar assembly 400 may be physically connected to the top of the plurality of battery cells 310. Additionally, the busbar assembly 400 may be electrically connected to the plurality of battery cells 310.

A venting device 600 may be provided in the outer surface of the outer side wall 200. When the pressure in the battery pack rises, the venting device 600 may vent gases.

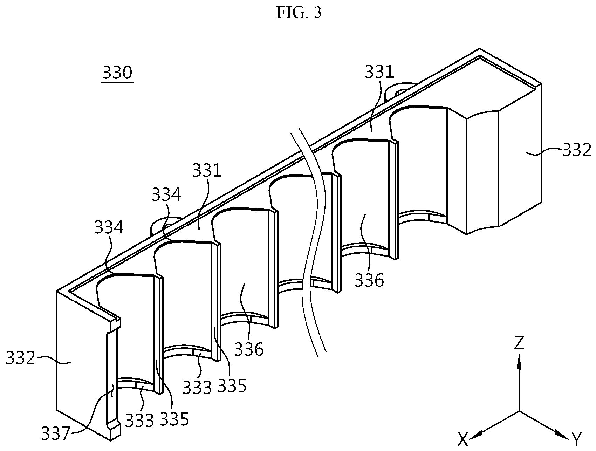

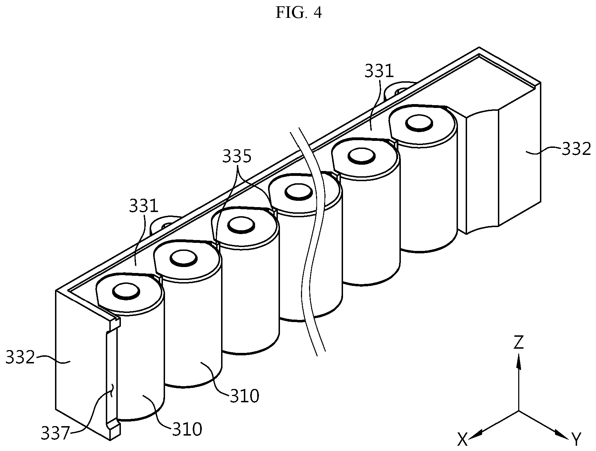

FIG. 3 is a diagram showing the inner side wall 330 of the battery pack according to an embodiment of the present disclosure. FIG. 4 is a diagram showing the inner side wall 330 and the battery cells 310 of the battery pack according to an embodiment of the present disclosure. Referring to FIGs. 3 and 4, at least some of the plurality of battery cells 310 of the battery pack according to an embodiment of the present disclosure may be fixed to the inner side wall 330. The inner side wall 330 may include a wall head 332 at two ends in X axis direction. The wall head 332 may have a slot 337. The inner side wall 330 may include a bottom rib 333 protruding inward. Additionally, the inner side wall 330 may include a top rib 334 protruding inward. The top rib 334 may be located higher than the bottom rib 333. The plurality of battery cells 310 may be fixed between the bottom rib 333 and the top rib 334. The inner side wall 330 may include a curved portion 336 formed on the inner side. The curved portion 336 may be curved along the side of the battery cell 310. The curved portion 336 may support the side of the battery cell 310. The inner side wall 330 may include a plurality of partition portions 335 protruding inward. Each partition portion 335 may protrude between the plurality of battery cells 310.

By this configuration of the present disclosure, the plurality of battery cells 310 may be stably fixed and supported by the inner side wall 330. Accordingly, stiffness of the battery pack may be improved.

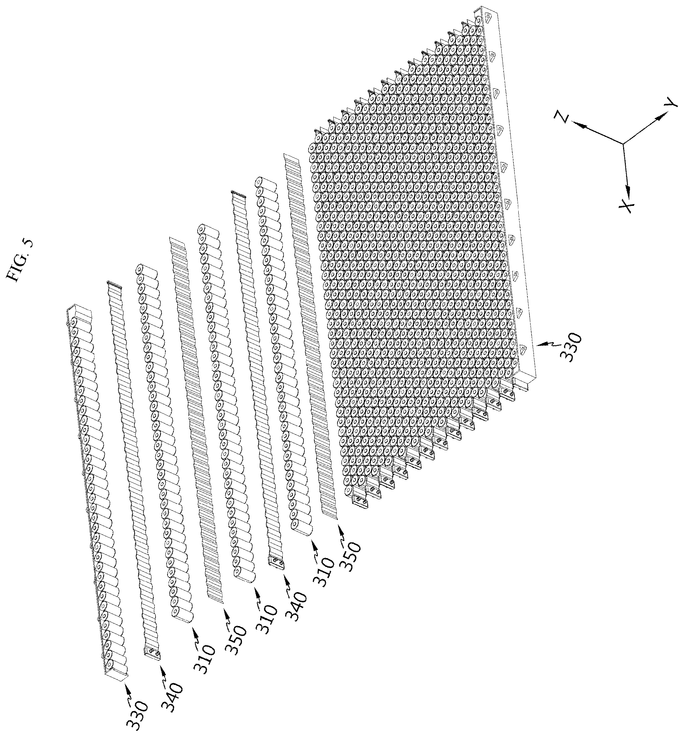

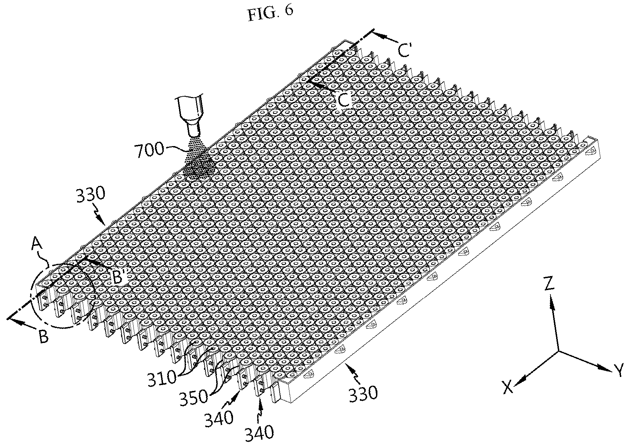

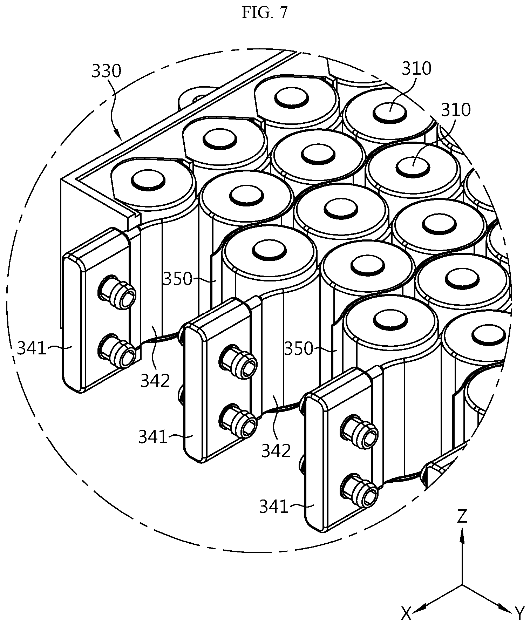

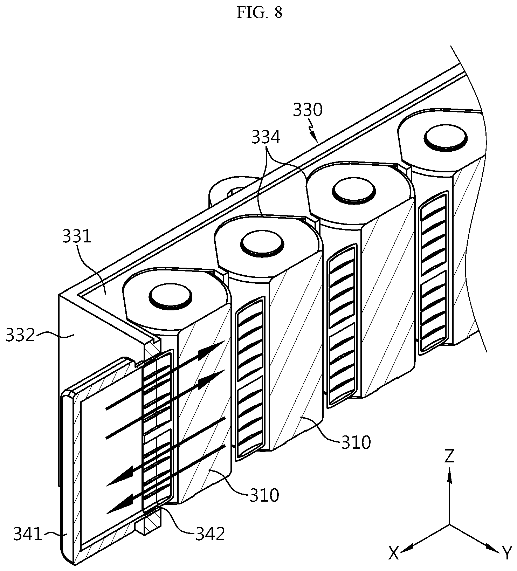

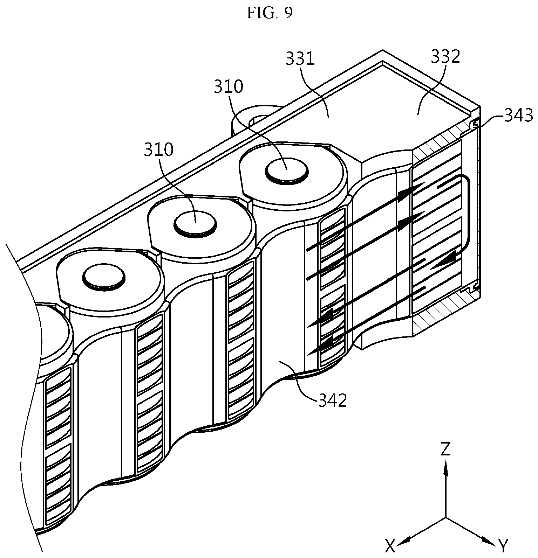

FIG. 5 is an exploded view showing some components of the battery array 300 of the battery pack according to an embodiment of the present disclosure. FIG. 6 is a perspective view showing the battery array 300 of the battery pack according to an embodiment of the present disclosure. FIG. 7 is an enlarged view of section A in FIG. 6. FIG. 8 is a cross-sectional view of FIG. 6, taken along the line B-B'. FIG. 9 is a cross-sectional view of FIG. 6, taken along the line C-C'.

Referring to FIGs. 5 to 9, the battery array 300 according to an embodiment of the present disclosure may include a cooling unit 340. The cooling unit 340 may extend in X axis direction or front-rear direction. The cooling unit 340 may extend across the battery array 300. Additionally, the cooling unit 340 may partition the plurality of battery cells 310. The cooling unit 340 may contact the plurality of battery cells 310. The cooling unit 340 may include a plurality of cooling units. Cooling liquids or cooling gases may flow through the cooling unit 340. The cooling unit 340 may include a head 341 and a first cooling tube 342. The first cooling tube 342 may extend in X axis direction or front-rear direction. The head 341 may be disposed at the front side of the first cooling tube 342. A tail 343 may be disposed at the rear side of the first cooling tube 342. The first cooling tube 342 may include a flexible material. The first cooling tube 342 may be curved along the side of the battery cell 310. The first cooling tube 342 may include a plurality of flow channels. The cooling fluid may flow through the first cooling tube 342. The cooling fluid may flow and circulate through the head 341, the first cooling tube 342 and the tail 343.

By this configuration of the present disclosure, the cooling effect of the battery array 300 may increase. The cooling unit 340 may effectively cool the battery cells 310 by increasing the contact area with the battery cells 310.

Additionally, by this configuration of the present disclosure, the weight of the battery array 300 may be reduced. Because the battery array 300 includes the lightweight cooling unit 340, the energy density of the battery pack may be improved.

Referring to FIGs. 5 to 9, the battery array 300 according to an embodiment of the present disclosure may include an insulation member 350. The insulation member 350 may extend in X axis direction or front-rear direction. The insulation member 350 may extend across the battery array 300. Additionally, the insulation member 350 may partition the plurality of battery cells 310. The insulation member 350 may contact the plurality of battery cells 310. The insulation member 350 may include a plurality of insulation members. The insulation member 350 may include a flexible material. The insulation member 350 may electrically insulate the plurality of battery cells 310. Additionally, the insulation member 350 may be made of a flame-retardant material. For example, the insulation member 350 may include a polycarbonate (PC) sheet, a ceramic wool.

The cooling unit 340 and the insulation member 350 may be arranged in an alternating manner. The pair of inner side walls 330 may be disposed on the outermost sides of the battery array 300.

By this configuration of the present disclosure, electrical safety of the battery array 300 may be improved.

Additionally, by this configuration of the present disclosure, the weight of the battery array 300 may be reduced. Because the battery array 300 includes the lightweight insulation member 350, the energy density of the battery pack may be improved.

Referring to FIGs. 5 to 9, the battery array 300 according to an embodiment of the present disclosure may be filled with a resin 700. The resin 700 may couple, fix or attach the components of the battery array 300 together.

By this configuration of the present disclosure, stiffness of the battery array 300 may be improved.

Additionally, by this configuration of the present disclosure, as the components of the battery array 300 are coupled by the resin 700 instead of the heavy fastening structure or fastening member S, the weight of the battery array 300 may be reduced. Accordingly, the energy density of the battery pack may be improved.

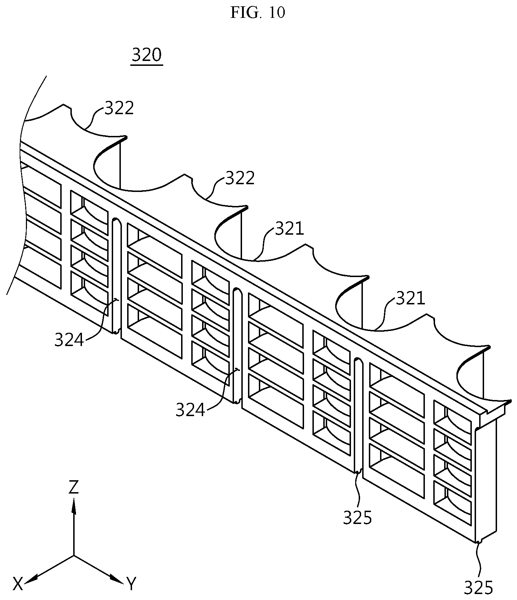

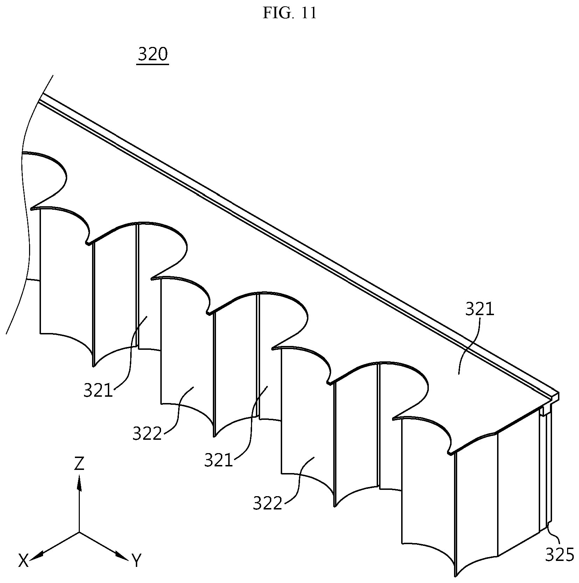

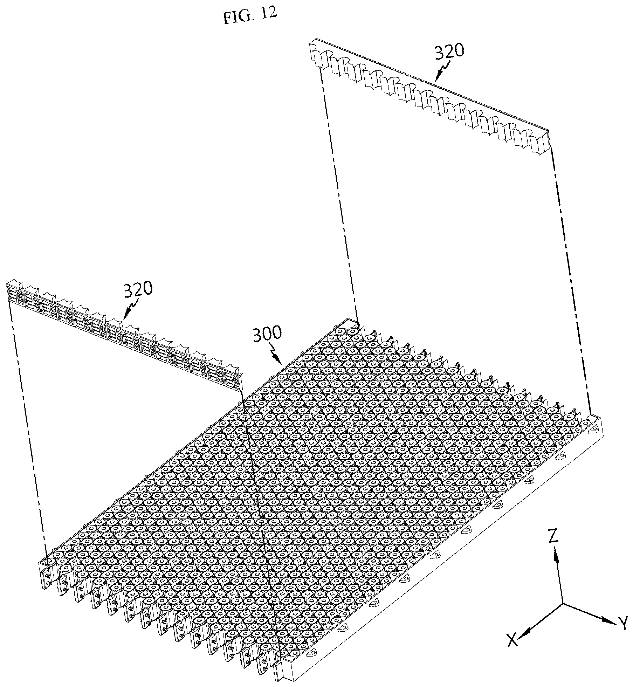

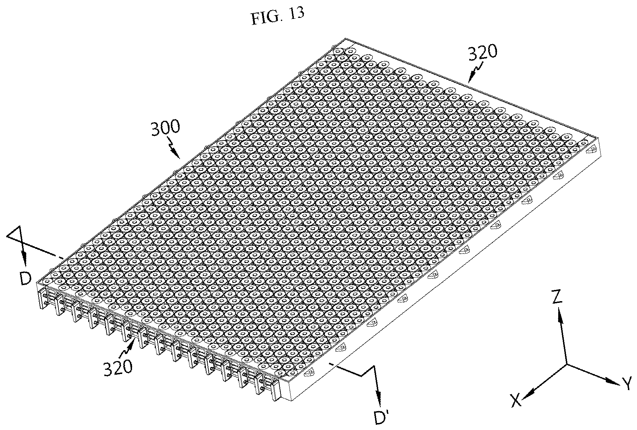

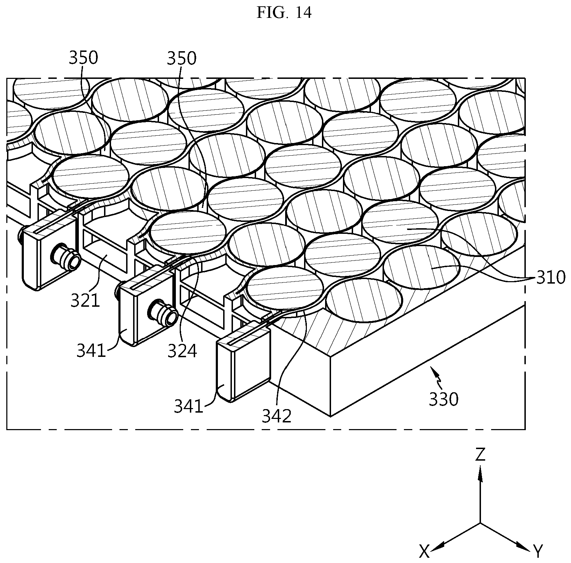

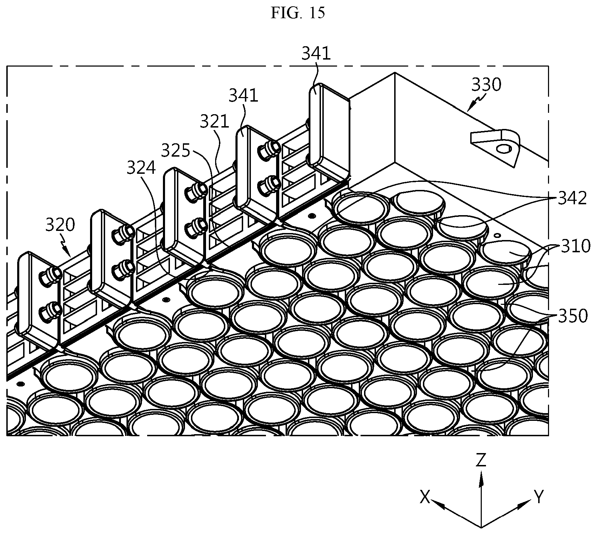

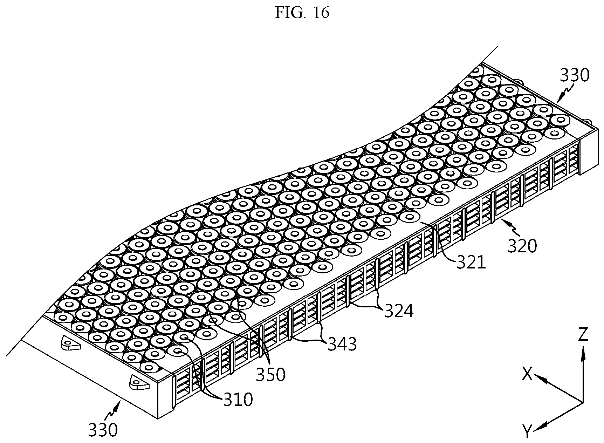

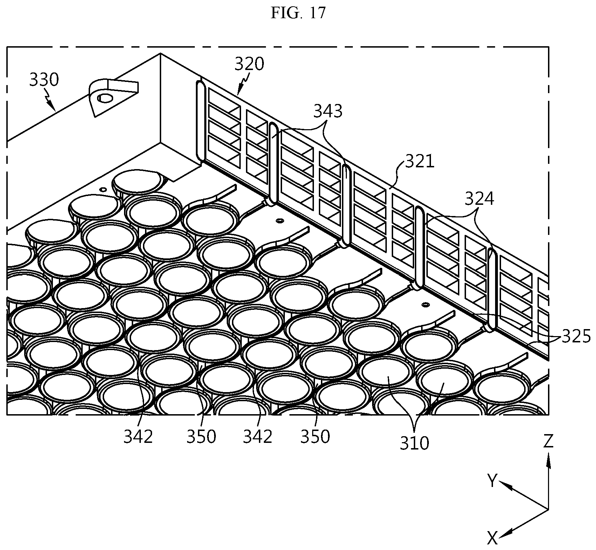

FIGs. 10 and 11 are diagrams showing the upper enclosure 320 of the battery pack according to an embodiment of the present disclosure. FIGs. 12 and 13 are diagrams showing the battery array 300 and the upper enclosure 320 of the battery pack according to an embodiment of the present disclosure. FIG. 14 is a cross-sectional view of FIG. 13, taken along the line D-D'. FIG. 15 is a diagram showing some components of the battery pack according to an embodiment of the present disclosure when viewed from bottom. FIG. 16 is a perspective view showing the battery pack according to an embodiment of the present disclosure when viewed from rear. FIG. 17 is a diagram showing some components of the battery pack according to an embodiment of the present disclosure when viewed from bottom.

Referring to FIGs. 10 to 17, the upper enclosure 320 of the battery pack according to an embodiment of the present disclosure may include a slot 324. The slot 324 may include a plurality of slots. The slots 324 may be arranged along Y axis direction. The cooling unit 340 may be inserted, coupled, mounted or fixed to the slot 324.

By this configuration of the present disclosure, the cooling unit 340 may be stably located and fixed.

Referring to FIGs. 10 to 17, the cooling unit 340 of the battery pack according to an embodiment of the present disclosure may pass through the slot 324 of the upper enclosure 320. The head 341 may be inserted into the slot 324 of the upper enclosure 320 on the front side. The tail 343 may be inserted into the slot 324 of the upper enclosure 320 on the rear side.

By this configuration of the present disclosure, the cooling unit 340 may be stably located and fixed.

Referring to FIGs. 10 to 17, the slot 324 of the upper enclosure 320 of the battery pack according to an embodiment of the present disclosure may be open downward. Additionally, the slot 324 may extend in Z axis direction. As the upper enclosure 320 moves in -Z axis direction or downward direction, the upper enclosure 320 may be assembled with the cooling unit 340. As the upper enclosure 320 on the front side moves in -Z axis direction or downward direction, the upper enclosure 320 on the front side may be assembled with the head 341. Additionally, as the upper enclosure 320 on the rear side moves in -Z axis direction or downward direction, the upper enclosure 320 on the rear side may be assembled with the tail 343.

By this configuration of the present disclosure, assembly efficiency of the battery pack may be improved.

Referring to FIGs. 10 to 17, the upper enclosure 320 of the battery pack according to an embodiment of the present disclosure may include a first curved portion 322 and a second curved portion 323. The first curved portion 322 and the second curved portion 323 may be disposed at the rear surface of the upper enclosure 320 on the front side. Additionally, the first curved portion 322 and the second curved portion 323 may be disposed at the front surface of the upper enclosure 320 on the rear side. The first curved portion 322 and the second curved portion 323 may be curved along the side of the battery cells 310. Accordingly, the upper enclosure 320 may stably support the battery array 300.

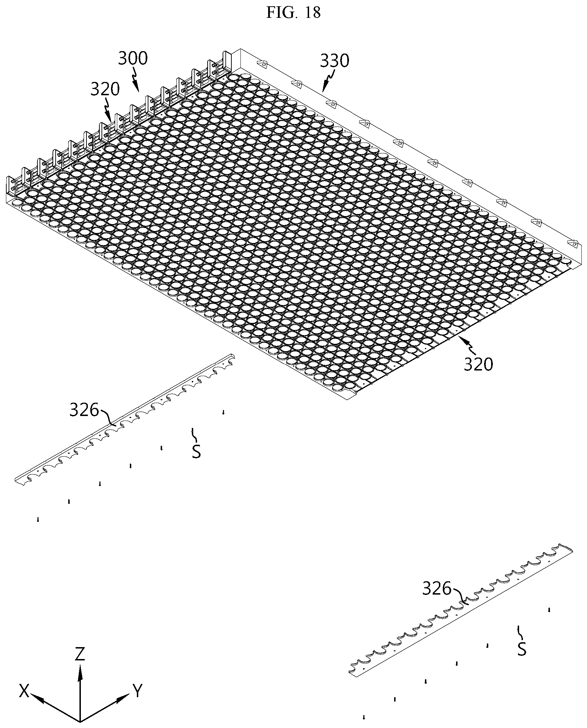

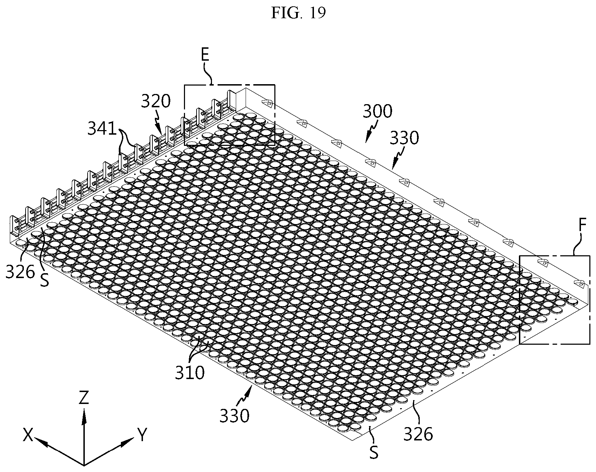

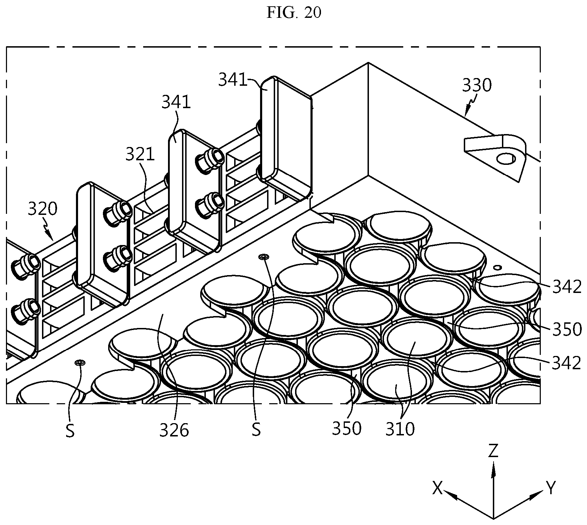

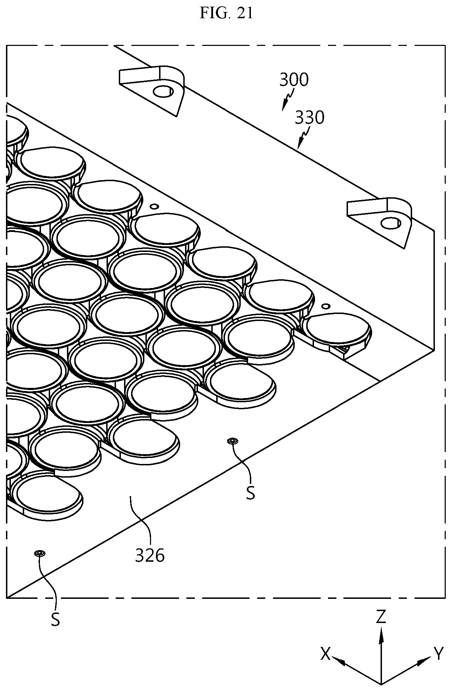

FIGs. 18 and 19 are diagrams showing the battery array 300 and a lower enclosure 326 according to an embodiment of the present disclosure. FIGs. 20 and 21 are diagrams showing some components of the battery pack according to an embodiment of the present disclosure when viewed from bottom. Referring to FIGs. 18 to 21, the battery pack according to an embodiment of the present disclosure may include the lower enclosure 326 located below the upper enclosure 320 and coupled to the upper enclosure 320. The lower enclosure 326 may be coupled, fastened, fixed or attached to the lower surface of the upper enclosure 320. The lower enclosure 326 may extend along the upper enclosure 320. Alternatively, the lower enclosure 326 may extend in the left-right direction or Y axis direction. The lower enclosure 326 may include a pair of lower enclosures. The lower enclosure 326 on the front side may be coupled to the upper enclosure 320 on the front side. The lower enclosure 326 on the rear side may be coupled to the upper enclosure 320 on the rear side.

By this configuration of the present disclosure, as the upper enclosure 320 and the lower enclosure 326 are coupled to each other, the cooling unit 340 may be stably located and fixed. Accordingly, stiffness of the battery array 300 may be improved.

Referring to FIGs. 18 to 21, the battery pack according to an embodiment of the present disclosure may include a fastening member S to fasten the lower enclosure 326 to the upper enclosure 320. The fastening member S may extend in the top-bottom direction or Z axis direction. The fastening member S may include a plurality of fastening members. The fastening members S may be arranged along the left-right direction or Y axis direction. The fastening member S may pass through the lower enclosure 326. At least part of the fastening member S may be inserted into the upper enclosure 320.

By this configuration of the present disclosure, assembly efficiency of the battery array 300 may be improved.

Referring to FIGs. 18 to 21, the lower enclosure 326 of the battery pack according to an embodiment of the present disclosure may cover the bottom of the slot 324. The lower enclosure 326 on the front side may cover the bottom of the slot 324 and the bottom of the head 341. Additionally, the lower enclosure 326 on the rear side may cover the bottom of the slot 324 and the bottom of the tail 343.

By this configuration of the present disclosure, as the upper enclosure 320 and the lower enclosure 326 are coupled to each other, the cooling unit 340 may be stably located and fixed. Accordingly, stiffness of the battery array 300 may be improved.

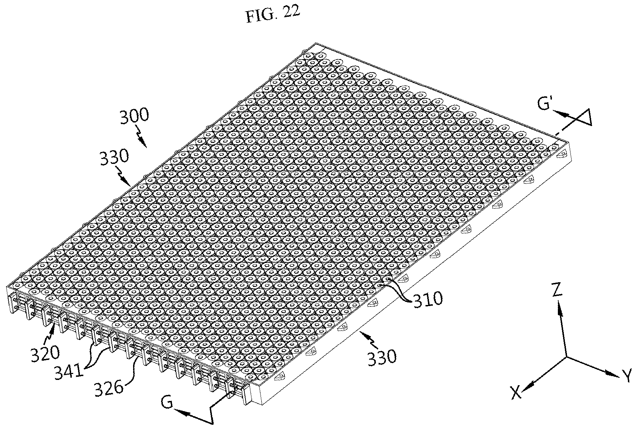

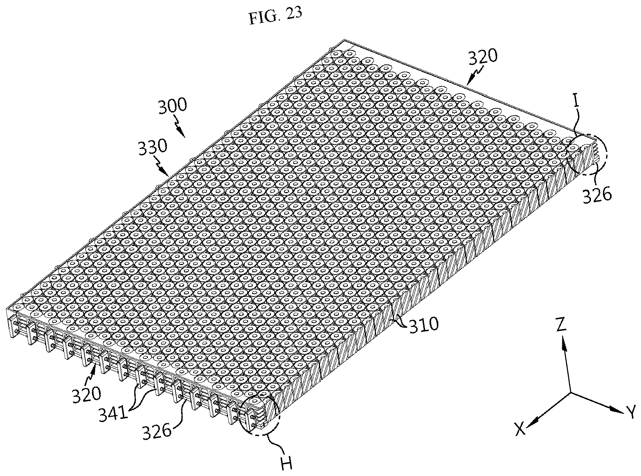

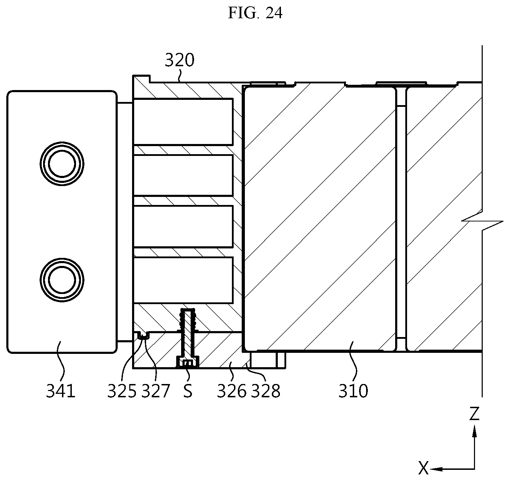

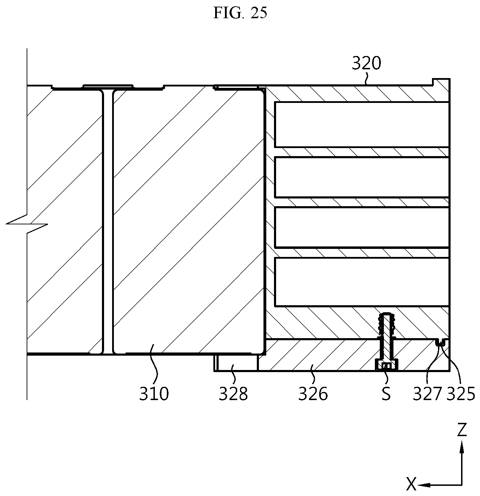

FIG. 22 is a perspective view showing some components of the battery pack according to an embodiment of the present disclosure. FIG. 23 is a cross-sectional view of FIG. 22, taken along the line G-G'. FIG. 24 is an enlarged view of section H in FIG. 23. FIG. 25 is an enlarged view of section I in FIG. 23.

Referring to FIGs. 22 to 25, the upper enclosure 320 of the battery pack according to an embodiment of the present disclosure may include a protrusion 325 on the lower surface. Additionally, the lower enclosure 326 may include a groove 327 into which the protrusion 325 is inserted.

On the contrary, the lower enclosure 326 may include a protrusion on the upper surface, and the upper enclosure 320 may include a groove into which the protrusion is inserted.

Additionally, components such as gaskets, glue or Cured In Place Gaskets (CIPG) may be further included between the upper enclosure 320 and the lower enclosure 326.

By this configuration of the present disclosure, sealing between the upper enclosure 320 and the lower enclosure 326 may be improved. Accordingly, it may be easy to control venting of gases or flammable particles from the battery array 300.

Referring to FIGs. 22 to 25, the lower enclosure 326 of the battery pack according to an embodiment of the present disclosure may extend inward, and cover at least some of the battery array 300. The lower enclosure 326 on the front side may extend rearward and cover at least some of the battery array 300 or the battery cells 310. Alternatively, the lower enclosure 326 on the front side may extend rearward and support at least some of the battery array 300 or the battery cells 310. The lower enclosure 326 on the rear side may extend frontward and cover at least some of the battery array 300 or the battery cells 310. Alternatively, the lower enclosure 326 on the rear side may extend frontward and support at least some of the battery array 300 or the battery cells 310.

By this configuration of the present disclosure, the battery array 300 may be spaced apart from the base plate 100. Additionally, the plurality of battery cells 310 may be spaced apart from the base plate 100. Accordingly, the plurality of battery cells 310 may be electrically insulated from the base plate 100 more reliably. Accordingly, electrical safety of the battery pack may be improved.

Additionally, by this configuration of the present disclosure, a venting space may be formed below the battery array 300. The space between the battery array 300 and the base plate 100 may be used as a venting space. Accordingly, thermal safety of the battery pack may be improved.

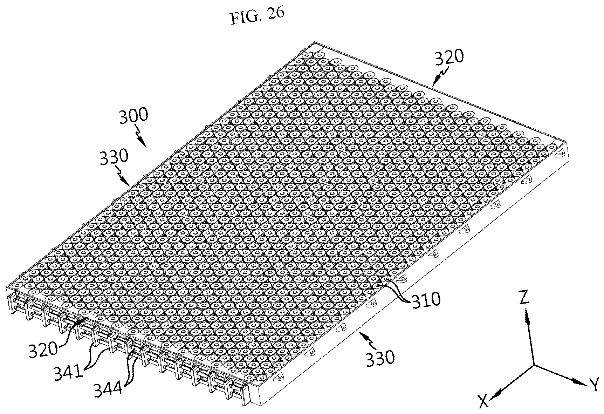

FIG. 26 is a diagram showing the battery array 300 of the battery pack according to an embodiment of the present disclosure. Referring to FIG. 26, the battery array 300 of the battery pack according to an embodiment of the present disclosure may include the plurality of battery cells 310, the upper enclosure 320, the lower enclosure 326, and the inner side wall 330. Additionally, the battery array 300 may further include a second cooling tube 344. The second cooling tube 344 may connect the plurality of heads 341. And the second cooling tube 344 may communicate with the plurality of heads 341. The cooling fluid may be supplied to each head 341 through the second cooling tube 344. Additionally, the cooling fluid flowing out of each head 341 may exit the battery pack through the second cooling tube 344.

A vehicle according to the present disclosure may include the above-described battery pack according to the present disclosure. The battery pack according to the present disclosure may be used in vehicle applications, for example, electric vehicles or hybrid electric vehicles. Additionally, in addition to the battery pack, the vehicle according to the present disclosure may further include a variety of other components included in the vehicle. For example, the vehicle according to the present disclosure may further include a car body, a motor, a controller such as an electronic control unit (ECU), etc.

The terms indicating directions such as upper, lower, left, right, front, rear, inner and outer are used for convenience of description, but it is obvious to those skilled in the art that the terms may change depending on the position of the stated element or an observer.

Although the present disclosure has been hereinabove described by a limited number of embodiments and drawings, the present disclosure is not limited thereto, and it is obvious to those skilled in the art that a variety of changes and modifications may be made thereto within the technical aspect of the present disclosure and the appended claims and equivalents thereof.

## Claims

1. A battery pack comprising:
a base plate;
an outer side wall protruded upward from the base plate;
a battery array located on the base plate and including a plurality of battery cells;
an inner side wall covering a side of the battery array and extended in a front-rear direction; and
an upper enclosure covering a front side of the battery array and extended in a left-right direction.

2. The battery pack according to claim 1, further comprising:
a resin that fills the battery array.

3. The battery pack according to claim 1, further comprising:
an insulation member extended across the battery array.

4. The battery pack according to claim 1, further comprising:
a cooling unit extended across the battery array.

5. The battery pack according to claim 4,
wherein the upper enclosure includes a slot, and
wherein the cooling unit is inserted into the slot.

6. The battery pack according to claim 5,
wherein the cooling unit includes:
a cooling tube extended across the battery array; and
a head disposed at a front side of the cooling tube, and
wherein the head passes through the slot.

7. The battery pack according to claim 5,
wherein the slot is open downward.

8. The battery pack according to claim 7, further comprising:
a lower enclosure located below the upper enclosure and coupled to the upper enclosure.

9. The battery pack according to claim 8, further comprising:
a fastening member configured to fasten the lower enclosure to the upper enclosure.

10. The battery pack according to claim 8,
wherein the lower enclosure covers a bottom of the slot.

11. The battery pack according to claim 8,
wherein the upper enclosure further includes a protrusion on a lower surface, and
wherein the lower enclosure includes a groove into which the protrusion is inserted.

12. The battery pack according to claim 8,
wherein the lower enclosure extends rearward and covers at least some of the battery array.

13. A vehicle comprising the battery pack according to any one of claims 1 to 12.
